# EUROPEAN PATENT SPECIFICATION

(11) **EP 3 695 141 B1**
(45) Date of publication and mention of the grant of the patent: **28.04.2021**
(21) Application number: 18707292.1
(22) Date of filing: 14.02.2018
(51) Int. Cl.: F16H 59/08, F16H 61/22

(54) **SHIFTER ASSEMBLY FOR CONTROLLING THE TRANSMISSION OF A MOTOR VEHICLE**
SCHALTVORRICHTUNG ZUR STEUERUNG DES GETRIEBES EINES KRAFTFAHRZEUGS
ENSEMBLE DE CHANGEMENT DE VITESSE POUR COMMANDER LA TRANSMISSION D'UN VÉHICULE À MOTEUR

(43) Date of publication of application: 19.08.2020
(73) Proprietor: KA Group AG, 8001 Zurich (CH)
(72) Inventor: EMRICSON, Ingemar, 56434 Bankeryd (SE); BLANK, David, 56533 Mullsjö (SE); KAMMENSJÖ, Andreas, 56433 Bankeryd (SE)
(74) Representative: Uexküll & Stolberg
(86) International application number: PCT/EP2018/053626
(87) International publication number: WO 2019/158191

(56) References cited:
- EP-A1- 3 225 884
- EP-A2- 3 115 647
- US-A1- 2015 152 958

## Description

The invention relates to a shifter assembly for controlling the transmission of a motor vehicle comprising a rotatably mounted actuation element that is rotatable for selection of a shift stage, and at least one locking assembly configured to lock the actuation element against rotation. The actuation element is provided with a locking track having a plurality of locking projections and the locking assembly includes at least one locking member. The locking member is rotatable about a rotational axis between a first position in which the locking member engages the locking track such as to lock the actuation element against rotation in at least one rotational direction and a second position in which rotation of the actuation element in the one rotational direction is allowed.

Within the field of motor vehicles, a shifter is generally used to allow a driver to manually select a gear or state of a transmission. The shifter is connected to the transmission in such a way that the selection made is allowed to determine the operation of the transmission and thus control the operation of the vehicle. The shifter itself can be of different designs and is often in the form of a gear shift lever that can be moved along a path between different positions corresponding to gears or modes of transmission. If a rotatable shifter, such as a rotatable knob, is used the actuation element is rotated between different angular positions, corresponding to gears or modes of transmission, such as Park (P), Reverse (R), Neutral (N) and Drive (D). Such rotatable shifters have become popular in shift-by-wire (SBW) configurations in which electrical signals are sent to a transmission depending on the rotated position of the shifter.

If the actuation element can rotate 360°, the shifter has the advantage that a particular angular position of the actuation element does not need to be linked to a particular state or mode of the transmission. Rather, a control unit arranged in communication with the shifter may determine the current position of the actuation element and decide which state of transmission this position should correspond to at the present time. This is particularly advantageous in a situation where the driver has switched off the ignition and left the car with the shifter in the Drive position and the vehicle automatically engages the Park position. When the driver returns to the vehicle and switches the ignition on, the control unit can detect the current position of the actuation element and determine that it should now be assigned to the Park (P) position. The remaining states of transmission can then be reassigned to the other angular positions of the actuation element to reflect this decision.

Depending on the chosen shift stage or the driving situation, rotation of the actuation element in clockwise or counterclockwise direction is to be limited or prevented. For example, normally, the Park (P) position is considered as an end position of a shifting gate, leaving the driver only the possibility to move actuation element in one direction, e.g., toward the Reverse (R) gear. In other situations, it is desirable that the rotation of the shifter is prevented completely, e.g., for safety reasons.

EP 3 115 647 A2 describes a shifter assembly that is part of a vehicle transmission that performs a dial type gear shift operation. The vehicle transmission includes a knob that is rotated to select a shift stage. A rotatably mounted actuation element is connected to the knob, and a locking mechanism is provided to lock the actuation element against rotation. For that purpose, the actuation element is provided with a locking track in the form of a plurality of fixing grooves with locking projections therebetween. A locking assembly interacting with the locking track includes a lever-like locking member that is rotatable about a rotational axis and which is driven by a linearly moving rod of a drive unit. The locking member has a first arm that extends from the rotational axis of the locking member and a second arm that extends from the rotational axis oblique to the first arm. The second arm has a locking pawl at its end for engaging the fixing grooves. The first arm is driven by the moving rod so that the second arm swivels about the pivot axis. By the swiveling motion of the locking member, the locking pawl is moved between a first rotational position, in which the locking pawl engages a fixing groove of the locking track and the actuation element is locked against rotation, and a second rotational position in which the locking pawl is disengaged from the locking track and the actuation element is free to rotate. The drive unit to rotate the locking member includes a moving rod that may reciprocate linearly, a coil and a magnet. A spring is provided between the moving rod and the magnet to elastically support the moving rod. The magnet is configured to retain moving rod in position when the supply of power to the coil is stopped. The locking unit requires power supply for bringing the locking member into and out of engagement with the actuation element, which is power consuming and considerably slow.

EP 3 225 884 A1 discloses a shifter assembly comprising the features of the preamble of claim 1.

It is an object of the invention to provide a shifter assembly that is efficient in terms of power consumption and that provides fast actuation times and low operational noise.

The object of the invention is solved by a shifter assembly as defined in claim 1. Preferred embodiments of the invention are set out in the dependent claims.

The locking track is provided on the circumference of a ratchet wheel connected to the actuation element (e.g., attached to the actuation element or formed thereon). The locking assembly includes a locking member and a biasing member applied to the locking member to rotationally bias the locking member into the first position, i.e., into engagement with the ratchet wheel. The locking member is formed by a spring-loaded pawl that is urged to engage the ratchet wheel under the force of the biasing member that engages the locking member. The locking assembly further includes an electrically activatable retaining device to retain the locking member in the second position such that the locking member is prevented from rotating and engaging the ratchet wheel under the force of the biasing member.

The locking member is shiftable by rotation between the first position, in which the locking member engages the ratchet wheel such as to lock the ratchet wheel in one rotational direction, and the second position, in which the ratchet wheel is free to rotate relative to the locking member in both rotational directions. The electrically activatable retaining device is arranged to retain the locking member in the second position. The biasing member is configured to move the locking member into the first position.

According to the present invention the ratchet wheel is configured such that when the locking member is in the first position, rotation of the ratchet wheel in a rotational direction opposite to the one rotational direction moves the locking member toward the electrically activatable retaining device and into the second position or at least close to the second position such that it may be retained in the second position or attracted into the second position and retained in the second position by supplying electrical power to the electrically activatable retaining device.

A ratchet is generally understood as a mechanical device that allows continuous rotary motion in only one direction while preventing/restricting motion in the opposite direction. A ratchet comprises a round gear with teeth (ratchet wheel). A pivoting, spring-loaded finger called a pawl engages the teeth. The teeth are uniform but asymmetrical, with each tooth having a moderate slope on one edge (tooth back) and a much steeper slope on the other edge (tooth face).

When the teeth are moving in the unrestricted direction, the pawl easily slides up and over the gently sloped edges of the teeth (back of teeth), with the spring forcing it into the depression between the teeth as it passes the tip of each tooth. When the teeth move in the opposite direction, however, the pawl will catch against the steeply sloped edge of the first tooth (tooth face) it encounters, thereby locking it against the tooth and preventing any further motion of the ratchet wheel in that direction. Hence, the ratchet wheel may be assigned a rotational locking direction and a rotational freewheeling direction opposite to the locking direction. In the locking direction the locking assembly is arranged to lock the ratchet wheel against rotation. In the freewheeling direction, the ratchet wheel allows the locking member to ride over the teeth and rotation of the ratchet wheel in said freewheeling direction.

The combination of a biasing member that urges the locking member into engagement with the ratchet wheel and an electrically activated retaining device to prevent the biasing member from urging the locking member into engagement with the ratchet wheel allows for an energy-efficient shifting of the locking member in a fast and reliable manner. By providing a rotating locking member, only a small movement of the locking member to lock the ratchet wheel is necessary. Further, there is low impact sound when the locking member is switched.

The biasing member may be provided in the form of a tension spring or a pressure spring (attached to an arm of the locking member) or in the form of a rotational spring that rotationally biases the locking member.

According to a further embodiment of the invention, the locking member is provided in the form of a double ended lever with a first lever arm and a second lever arm, wherein the biasing member is applied to the first lever arm and the second lever arm is adapted to engage the locking track. According to yet a further embodiment, the electrically activated retaining device preferably directly acts on the second arm so that forces (biasing member and electrically activated retaining device) act on different sides of the locking member in relation to the rotational support. Preferably, the locking member is rotationally supported in a section between the first and the second lever arm.

According to yet a further embodiment, the first lever arm is shorter than the second lever arm. Thereby, a transmission ratio is achieved. The shifting movement of the first lever arm to bring the locking member into engagement with the ratchet wheel such as to lock the latter against rotation is smaller than the shifting movement of the second arm to engage the ratchet wheel. A fast shifting of the locking member into the second position is achieved.

According to a further embodiment of the invention, the electrically activated retaining device comprises electromagnetic means arranged to magnetically interact with the locking member to retain the locking member against rotation in the second position, e.g., an electro magnet. Preferably, the locking member is provided in the form of a double ended lever (as indicated above) with a first lever arm and a second lever arm, wherein the biasing member is applied to the first lever arm and the second lever arm is adapted to engage the locking track and the electromagnetic means is arranged to magnetically interact with the second lever arm. It only requires interruption of electric power supply to the electrically activated retaining device to release the locking member (second lever arm) such that the locking member rotates and engages the ratchet wheel. The electromagnetic means may comprise a coil to generate a magnetic field upon energization. Preferably, the locking member or at least part thereof (e.g., the second lever arm) is made of a ferrous material so that the electrically activated retaining device can retain the locking member in the second position.

According to a further embodiment of the invention, the ratchet wheel is configured such that when the support of electrical power to the electrically activated retaining device (*e.g*., electromagnetic means) is interrupted, rotation of the ratchet wheel in one direction is allowed while rotation in the opposite direction is prevented by the locking member.

According to the invention, the ratchet wheel is arranged such that rotation of the ratchet wheel (*i.e*., in the freewheeling direction) moves the locking member toward the electrically activated retaining device, and preferably into the second position. For that purpose, the ratchet wheel may comprise a number of teeth, with each tooth may have a moderate slope on one edge (back) and a much steeper slope on the other edge (front). The locking assembly may be arranged such that the back of the single tooth pushes the locking member away from the rotational center of the ratchet wheel toward the electrically activated retaining device. Preferably, the locking member is pushed into or at least moved close to the second position such that it may be retained in the second position or attracted(pulled) into the second position and retained in the second position by supplying electrical power to the electrically activated retaining device. Hence, the forces to prestress the biasing member are provided by the ratchet wheel which is very efficient in terms of energy consumption. In the case of a locking member in the form of a double-ended lever, the ratchet wheel moves the second lever arm toward the electrically activated retaining device against the force of the biasing member that is applied to the first lever arm.

According to a further embodiment of the invention, the locking assembly comprises a mounting bracket, wherein the locking member is rotationally supported on the mounting bracket, and wherein the electrically activated retaining device and the biasing member are each mounted on the mounting bracket such that the locking assembly can be installed in the form of a preassembled unit. This embodiment is not only cost effective but is easy to install.

According to a further embodiment of the invention, the locking member is a preferably stamped latch. A light locking member provides benefits in terms of reduced current consumption. Preferably, the locking member and the bracket are made of steel or other ferrous material. Alternatively, the bracket is not made of steel or other ferrous material and in accordance with another embodiment of the invention, the bracket is of a non-ferrous material such as plastic, but is provided with a ferrous element, such as a pin, that is arranged to function as the core of an electromagnet.

According to another embodiment of the invention, the locking track includes two oppositely oriented ratchets wheels and the shifter assembly comprises two locking assemblies, each assigned to one of the ratchet wheels. Hence, one of the locking assemblies may lock the actuation element against rotation in clockwise direction and the other locking assembly may lock the actuation element against rotation in counterclockwise direction.

According to yet a further embodiment of the invention, the shifter assembly is connected to a control unit to control actuation of the electromagnet means of each of the locking assemblies, wherein the control unit is configured such that the electrically activated retaining devices of the locking assemblies can be activated independently from each other. An efficient restriction of the possible movement of the shifter can be achieved in different rotational positions.

The invention further relates a motor vehicle comprising a shifter assembly as described herein.

The foregoing advantages as well as other advantages of various aspects of the present invention will become apparent to those of ordinary skill in the art by reading the following detailed description, with appropriate reference to the accompanying drawings, in which
- Fig. 1: a shifter assembly in accordance with a first embodiment of the invention;
- Fig. 2: parts of the shifter assembly of Figure 1;
- Fig. 3: a detailed view of Figure 2;
- Fig. 4: components of the shifter assembly of Figure 1; and
- Fig. 5a-c: the shifter assembly of Figure 1 in different states.

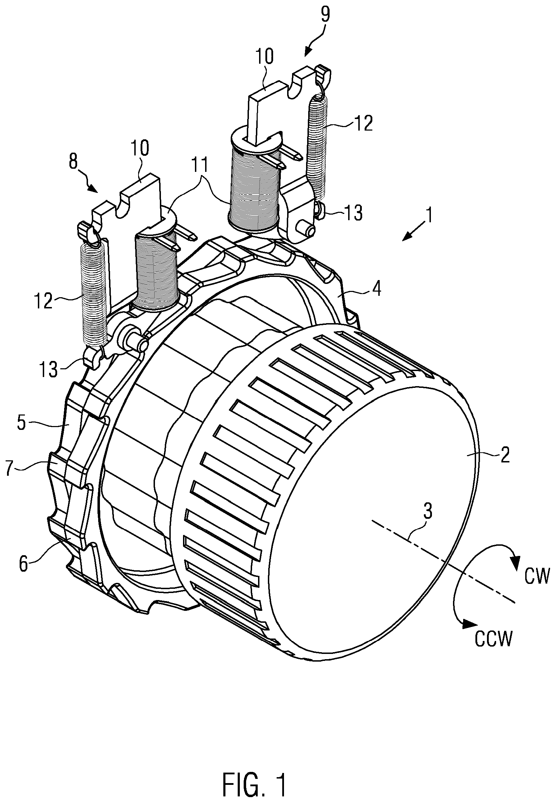

**Figure 1** shows a shifter assembly 1 for controlling the transmission of a motor vehicle. The shifter assembly 1 comprises a rotatably mounted actuation element 2 in the form of a knob that is rotatable for the selection of a shift stage such as Park (P), Drive (D), Neutral (N) and Reverse (R) about a rotational axis 3 in clockwise (CW) direction and in counterclockwise (CCW) direction. The actuation element 2 is provided with a locking track having a plurality of locking projections. The locking track is provided by a first ratchet wheel 4 and a second ratchet wheel 5 located adjacent the first ratchet wheel 4, each of the ratchet wheels 4, 5 being firmly connected to the actuation element 2.

The locking track serves to lock the actuation element 2 against rotation in counterclockwise direction and/or clockwise direction. The ratchet wheels 4, 5 are each provided with a number of teeth 6, 7, wherein the teeth of the first and second ratchet wheels 4, 5 are oriented in opposite circumferential directions. The teeth are formed asymmetrical and have an inclined back and a much steeper front. The front of the teeth 6 of the first ratchet wheel 4 is oriented in counterclockwise direction, whereas the front of the teeth 7 of the second ratchet wheel 5 is oriented in clockwise direction.

In order to lock the actuation element 2 against rotation in clockwise and counterclockwise direction, a first locking assembly 8 and a second locking assembly 9 are provided. The locking assemblies 8 and 9 are basically identical in construction but are oriented in opposite direction, i.e., the second locking assembly 9 showing its back is turned 180° relative to the first locking assembly 8 showing its front. The locking assemblies 8,9 each comprise a mounting bracket 10 made of sheet metal, a coil 11 which may be energized with electrical power and a coil spring 12 (tension spring). At a lower end of the mounting bracket 10 a locking member 13 in the form of a latch is rotatably supported on the mounting bracket 10.

The first locking assembly 8 is arranged substantially above the first ratchet wheel 4 and the second locking assembly 9 is arranged substantially above the second ratchet wheel 5. The locking member 13 of the first locking assembly 8 is configured to engage the teeth 6 of the first ratchet wheel 4 and to lock the first ratchet wheel 6 against rotation in counterclockwise (CCW) direction and the second locking assembly 9 is configured to engage the teeth 7 of the second ratchet wheel 5 and lock the second ratchet wheel 5 against rotation in clockwise (CW) direction.

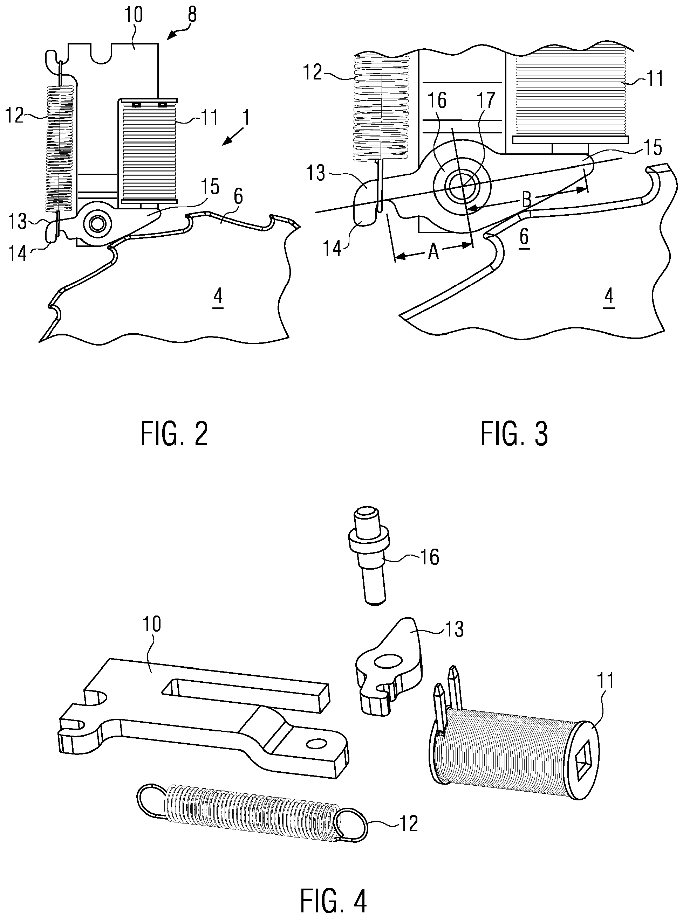

**Figure 2** shows in detail the first locking assembly 8 in Figure 1 and the interaction with the first ratchet wheel 4 of the shifter assembly. **Figure 3** is an enlarged view of the locking member 13 in Figure 2. The locking member 13 is provided in the form of a double ended lever with a first lever arm 14 and a second lever arm 15. In a center section connecting the first lever arm 14 and the second lever arm 15, the locking member 13 is provided with a through opening to receive a latch shaft or mounting shaft 16 to mount the locking member 13 on the mounting bracket 10 such that the locking member 13 may pivot about a center of rotation 17.

The locking member 13 is rotatable between a first position in which the second lever arm 15 engages the front of the teeth 6 of the first ratchet wheel 4 and locks the first ratchet wheel 4 against counterclockwise rotation and a second position (shown in Figure 3) in which the second lever arm 15 is disengaged from the first ratchet wheel 4 and the first ratchet wheel 4 is free to rotate in counterclockwise direction.

The biasing member 12 in the form of a spring is attached to the first lever arm 14 at a distance 'A' from the center of rotation 17. The coil 11 is arranged such as to magnetically interact with the second lever arm 15. When energized, the coil 11 generates magnetic pulling forces acting on the second lever arm 15 at a distance 'B' from the center of rotation 17. The first lever arm 14 is shorter than the second lever arm 15 ('A' < 'B'). When the coil is energized and the locking member 13 is in the second position as shown in Figures 2 and 3, the coil acts as an electrically activatable retaining device that retains the locking member 14 in the second position such that the locking member 13 is prevented from rotating and engaging the ratchet wheel 4 under the force of the biasing member 12. The second locking assembly 9, which interacts with the second ratchet wheel 5, is constructed correspondingly.

**Figure 4** shows the components of the locking assemblies 8, 9 in a disassembled condition. The mounting bracket 10 is provided in the form of a sheet metal bracket that is stamped and therefore easy and cost-effective to manufacture. On a side section of the sheet metal bracket 10, an elongated bar receives the center section of the coil 11. On the opposite side of the mounting bracket 10, the spring 11 is to be attached. The mounting shaft 16 is to be inserted in a hole in the locking member 13 and into a hole at the forward end of the mounting bracket 10 thereby rotatably mounting the locking member 13 on the mounting bracket.

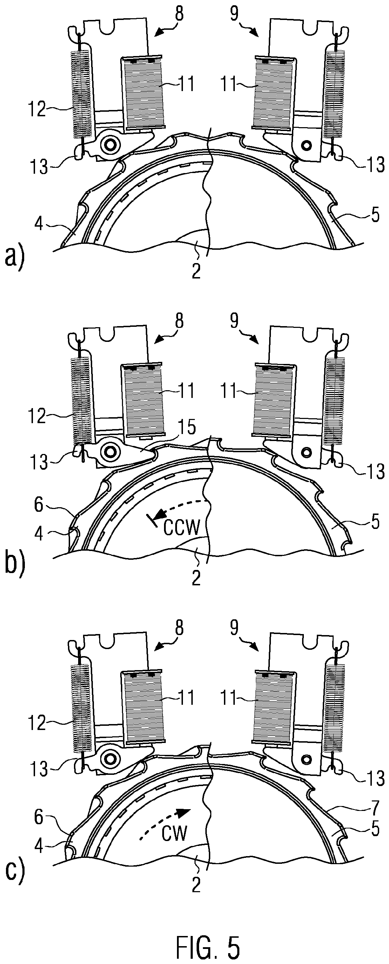

**Figure 5a-5c** shows part of the shifter assembly of Figure 1 with the first and second ratchet wheel 4 and 5. The curved line in the middle of the wheels indicates that the right half of the first ratchet wheel 4 is not shown to expose the right half of the second ratchet wheel 5 lying behind the first ratchet wheel 4. As evident from the direction of the teeth of the first and second ratchet wheel, the teeth of the first ratchet wheel 4 and the teeth of the second ratchet wheel 5 are oriented in opposite directions.

Figures 5a - 5c illustrate the actuation of the locking assemblies 8, 9 to lock the shifter assembly against counterclockwise rotation of the actuation element 2.

In Figure 5a, the coil 11 of the first locking assembly 8 and the coil of the second locking assembly 9 are both supplied with electrical power. Both locking members 13 are in their respective second position and retained in that position by the magnetic field generated by the respective coil. The actuation element 2 is free to rotate clockwise and counterclockwise direction.

In Figure 5b, power supply to the first locking assembly 8 is interrupted so that the coil 11 of the first locking assembly 8 does not produce a magnetic field and does not retain the respective locking member 13 in its second position. The locking member 13 of the first locking assembly 8 may now rotate under the force of the spring 12 such that its second lever arm 15 may engage the teeth 6 of the first ratchet wheel 4. When the teeth 6 are moving in the restricted direction (counterclockwise direction), the spring 12 forces the locking member 13 into the depression between adjacent teeth. Upon further rotation in counterclockwise direction, the second lever arm 15 will catch against the face-side sloped edge of the next tooth (as shown in Figure 5b) thereby locking the first ratchet wheel 4 against further rotation in the counterclockwise (CCW) direction. Rotation in the opposite direction (clockwise direction), however, is possible, because of the activated second locking assembly 9.

In Figure 5c, the first locking assembly 8 remains unpowered and the second locking assembly 9 remains powered, which corresponds to the state in Figure 5b. The user now rotates the actuation element 2 in clockwise direction. The locking member 13 of the second locking assembly 9 cannot catch the teeth 7 on the second ratchet wheel 5, because it is retained in the second position.

At the same time, the locking member 13 of the first locking assembly 8 is rotatable and is constantly forced against the first ratchet wheel 4 by the spring 12 of the first locking assembly 8. However, in clockwise direction, the locking member 13 of the first locking assembly 8 will ride over the teeth 6 of the first ratchet wheel 4, wherein the teeth do not provide an edge for the locking member to catch and lock the first ratchet wheel 4.

In order to lock the shifter assembly in clockwise direction, a control unit (not shown) interrupts power to the coil 11 of the second locking assembly 9, so that the locking member 13 of the second locking assembly 9 may rotate under the force of the spring such that its second lever arm engages the front end of the teeth of the second ratchet wheel 5.

### Reference numerals

- 1: shifter assembly
- 2: actuation element
- 3: rotational axis
- 4: first ratchet wheel
- 5: second ratchet wheel
- 6: teeth of first ratchet wheel
- 7: teeth of second ratchet wheel
- 8: first locking assembly
- 9: second locking assembly
- 10: mounting bracket
- 11: coil
- 12: spring
- 13: locking member
- 14: first lever arm
- 15: second lever arm
- 16: mounting shaft
- 17: center of rotation

## Claims

1. A shifter assembly (1) for controlling the transmission of a vehicle comprising a rotatably mounted actuation element (2) that is rotatable for selection of a shift stage, and at least one locking assembly (8, 9) configured to lock the actuation element (2) against rotation,
wherein the actuation element (2) is provided with a locking track having a plurality of locking projections,
wherein the locking track is provided on the circumference of a ratchet wheel (4, 5) connected to the actuation element (2);
wherein the at least one locking assembly (8, 9) includes a locking member (13) that is rotatable about a rotational axis (17) between a first position in which the locking member (13) engages the locking track such as to lock the ratchet wheel (4, 5) and the actuation element (2) against rotation in at least one rotational direction and a second position in which rotation of the ratchet wheel (4, 5) and the actuation element (2) in the one rotational direction is allowed,
wherein the at least one locking assembly (8, 9) includes:
a blasing member (12) applied to the locking member (13) to rotationally bias the locking member (13) into the first position; and
an electrically activatable retaining device (11) to retain the locking member (13) in the second position when electrically activated such that tne locking member (13) is prevented from rotating and engaging the ratchet wheel (4, 5) under the force of the biasing member (12);
**characterized in that** the ratchet wheel (4, 5) is configured such that when the locking member (13) is in the first position, rotation of the ratchet wheel (4, 5) in a rotational direction opposite to the one rotational direction moves the locking member (13) toward the electrically activatable retaining device (11) and into the second position or at least close to the second position such that it may be retained in the second position or attracted into the second position and retained in the second position by supplying electrical power to the electrically activatable retaining device (11).

2. Shifter assembly according to claim 1, wherein the locking member (13) is provided in the form of a double ended lever with a first lever arm (14) and a second lever arm (15), wherein the biasing member (12) is applied to the first lever arm (14) and the second lever arm (15) is adapted to engage the locking track.

3. Shifter assembly according to claim 2, wherein the first lever arm (14) is shorter than the second lever arm (15).

4. Shifter assembly according to any of the preceding claims, wherein the electrically activatable retaining device comprises electromagnetic means (11) arranged to magnetically interact with the locking member (13).

5. Shifter assembly according to any of the preceding claims, wherein the at least one locking assembly (8, 9) comprises a mounting bracket (10), wnerein tne locking member (13) is rotationally supported on the mounting bracket (10), and wherein tne electrically activatable retaining device (11) and the blasing member (12) are each mounted on the mounting bracket (10) such that the at least one locking assembly (8, 9) can be installed in the form of a preassembled unit.

6. Shifter assembly according to any of the preceding claims, wherein the biasing member (12) is a tension spring, a pressure spring or a rotational spring.

7. Shifter assembly according to any of the preceding claims, wherein the locking member (13) is a stamped latch.

8. Shifter assembly according to any of the preceding, wherein the at least one locking assembly includes two oppositely oriented ratchet wheels (4, 5) and wherein the shifter assembly comprises two locking assemblies (8, 9), each assigned to one of the ratchet wheels (4, 5).

9. Shifter assembly according to claim 8, wherein the shifter assembly is connected to a control unit to control actuation of the electrically activatable retaining devices (11), wherein the control unit is configured such that the electrically activatable retaining devices (11) can be activated independently from each other.

10. Vehicle comprising a shifter assembly as defined in any of the preceding claims.

## Patentansprüche

1. Schaltvorrichtung (1) zum Steuern des Getriebes eines Fahrzeugs, mit einem drehbar gelagerten Betätigungselement (2), das zur Auswahl einer Schaltstufe drehbar ist, und mit wenigstens einem Verriegelungsaufbau (8, 9), der dazu ausgestaltet ist, um das Betätigungselement (2) gegenüber Drehungen zu verriegeln,
wobei das Betätigungselement (2) mit einer Verriegelungsbahn mit einer Mehrzahl von Verriegelungsvorsprüngen versehen ist, wobei die Verriegelungsbahn am Umfang eines mit dem Betätigungselement (2) verbundenen Sperrrades (4, 5) vorgesehen ist,
wobei der wenigstens eine Verriegelungsaufbau (8, 9) ein Verriegelungselement (13) aufweist, das um eine Drehachse (17) zwischen einer ersten Stellung, in der das Verriegelungselement (13) an der Verriegelungsbahn angreift, um so das Sperrrad (4, 5) und das Betätigungselement (2) gegen Drehung in wenigstens eine Drehrichtung zu verriegeln, und einer zweiten Stellung drehbar ist, in der die Drehung des Sperrrades (4, 5) und des Betätigungselements (2) in die eine Drehrichtung zugelassen wird,
wobei der wenigstens eine Verriegelungsaufbau (8, 9) aufweist:
ein Vorspannelement, das auf das Verriegelungselement (13) einwirkt, um das Verriegelungselement (13) in Drehrichtung in die erste Stellung vorzuspannen, und
eine elektrische aktivierbare Rückhalteeinrichtung (11), um das Verriegelungselement (13) in der zweiten Stellung zurückzuhalten, wenn sie elektrisch aktiviert ist, so dass das Verriegelungselement (13) daran gehindert wird, sich zu drehen und unter der Krafteinwirkung des Vorspannelements (12) mit dem Sperrrad (4, 5) einzugreifen,
**dadurch gekennzeichnet, dass** das Sperrrad (4, 5) dazu ausgestaltet ist, so dass, wenn das Verriegelungselement (13) in der ersten Stellung ist, Drehung des Sperrrades (4, 5) in Drehrichtung entgegen der einen Drehrichtung das Verriegelungselement (13) zu der elektrisch aktivierbaren Rückhalteeinrichtung (11) hin und in die zweite Stellung oder wenigstens nahe an die zweite Stellung bewegt, so dass es in der zweiten Stellung zurückgehalten werden kann oder in die zweite Stellung angezogen wird und in der zweiten Stellung zurückgehalten werden kann, indem der elektrisch aktivierbaren Rückhalteeinrichtung (11) elektrische Energie zugeführt wird.

2. Schaltvorrichtung nach Anspruch 1, wobei das Verriegelungselement (13) in der Form eines zweiseitigen Hebels mit einem ersten Hebelarm (14) und einem zweiten Hebelarm (15) bereitgestellt ist, wobei das Vorspannelement (12) auf den ersten Hebelarm (14) angewendet wird und der zweite Hebelarm (15) dazu ausgestaltet ist, mit der Verriegelungsbahn einzugreifen.

3. Schaltvorrichtung nach Anspruch 2, wobei der erste Hebelarm (14) kürzer als der zweite Hebelarm (15) ist.

4. Schaltvorrichtung nach einem der vorhergehenden Ansprüche, wobei die elektrisch aktivierbare Rückhalteeinrichtung eine elektromagnetische Einrichtung (11) aufweist, die dazu ausgestaltet ist, um magnetisch mit dem Verriegelungselement (13) in Wechselwirkung zu treten.

5. Schaltvorrichtung nach einem der vorhergehenden Ansprüche, wobei der wenigstens eine Verriegelungsaufbau (8, 9) eine Montagehalterung (10) aufweist, wobei das Verriegelungselement (13) an der Montagehalterung (10) drehbar gelagert ist und wobei die elektrisch aktivierbare Rückhalteeinrichtung (11) und das Vorspannelement (12) jeweils an der Montagehalterung (10) befestigt sind, so dass der wenigstens eine Verriegelungsaufbau (8, 9) in der Form einer vorgefertigten Einheit installiert werden kann.

6. Schaltvorrichtung nach einem der vorhergehenden Ansprüche, wobei das Vorspannelement (12) eine Spannfeder, eine Druckfeder oder eine Drehfeder ist.

7. Schaltvorrichtung nach einem der vorhergehenden Ansprüche, wobei das Verriegelungselement (13) ein gestanzter Riegel ist.

8. Schaltvorrichtung nach einem der vorhergehenden Ansprüche, wobei der wenigstens eine Verriegelungsaufbau zwei entgegengesetzt orientierte Sperrräder (4, 5) umfasst und wobei die Schaltvorrichtung zwei Verriegelungsaufbauten (8, 9) umfasst, von denen jeweils einer einem der Sperrräder (4, 5) zugeordnet ist.

9. Schaltvorrichtung nach Anspruch 8, wobei die Schaltvorrichtung mit einer Steuereinheit zur Steuerung der Aktivierung der elektrisch aktivierbaren Rückhalteeinrichtungen (11) verbunden ist, wobei die Steuereinheit dazu eingerichtet ist, so dass die elektrisch aktivierbaren Rückhalteeinrichtungen (11) unabhängig voneinander aktiviert werden können.

10. Fahrzeug mit einer Schaltvorrichtung wie in einem der vorhergehenden Ansprüche definiert.

## Revendications

1. Ensemble de changement de vitesse (1) pour la commande de la transmission d'un véhicule comprenant un élément d'actionnement monté de manière à pouvoir tourner (2) qui peut tourner pour la sélection d'un étage de changement de vitesse, et au moins un ensemble de verrouillage (8, 9) configuré pour verrouiller l'élément d'actionnement (2) contre la rotation,
dans lequel l'élément d'actionnement (2) est doté d'une piste de verrouillage présentant une pluralité de saillies de verrouillage, dans lequel la piste de verrouillage est prévue sur la circonférence d'une roue à rochet (4, 5) raccordée à l'élément d'actionnement (2) ;
dans lequel l'au moins un ensemble de verrouillage (8, 9) inclut un élément de verrouillage (13) qui peut tourner autour d'un axe de rotation (17) entre une première position, dans laquelle l'élément de verrouillage (13) met en prise la piste de verrouillage de sorte à verrouiller la roue à rochet (4, 5) et l'élément d'actionnement (2) contre la rotation dans au moins une direction de rotation et une seconde position, dans laquelle la rotation de la roue à rochet (4, 5) et l'élément d'actionnement (2) dans l'une direction de rotation est autorisée,
dans lequel l'au moins un ensemble de verrouillage (8, 9) inclut :
un élément d'inclinaison (12) appliqué à l'élément de verrouillage (13) pour incliner en rotation l'élément de verrouillage (13) dans la première position ; et
un dispositif de retenue activable électriquement (11) pour retenir l'élément de verrouillage (13) dans la seconde position lorsqu'il est activé électriquement de sorte que l'élément de verrouillage (13) soit empêché de tourner et de mettre en prise la roue à rochet (4, 5) sous la force de l'élément d'inclinaison (12) ;
**caractérisé en ce que** la roue à rochet (4, 5) est configurée de sorte que lorsque l'élément de verrouillage (13) est dans la première position, la rotation de la roue à rochet (4, 5) dans une direction de rotation opposée à l'une direction de rotation déplace l'élément de verrouillage (13) vers le dispositif de retenue activable électriquement (11) et dans la seconde position ou au moins près de la seconde position de sorte qu'il puisse être retenu dans la seconde position ou attiré dans la seconde position et retenu dans la seconde position par fourniture de puissance électrique au dispositif de retenue activable électriquement (11).

2. Ensemble de changement de vitesse selon la revendication 1, dans lequel l'élément de verrouillage (13) est prévu sous la forme d'un levier à double extrémité avec un premier bras de levier (14) et un second bras de levier (15), dans lequel l'élément d'inclinaison (12) est appliqué au premier bras de levier (14) et le second bras de levier (15) est adapté pour mettre en prise la piste de verrouillage.

3. Ensemble de changement de vitesse selon la revendication 2, dans lequel le premier bras de levier (14) est plus court que le second bras de levier (15).

4. Ensemble de changement de vitesse selon l'une quelconque des revendications précédentes, dans lequel le dispositif de retenue activable électriquement comprend des moyens électromagnétiques (11) agencés pour interagir de manière magnétique avec l'élément de verrouillage (13).

5. Ensemble de changement de vitesse selon l'une quelconque des revendications précédentes, dans lequel l'au moins un ensemble de verrouillage (8, 9) comprend un support de montage (10), dans lequel l'élément de verrouillage (13) est supporté en rotation sur le support de montage (10), et dans lequel le dispositif de retenue activable électriquement (11) et l'élément d'inclinaison (12) sont chacun montés sur le support de montage (10) de sorte que l'au moins un ensemble de montage (8, 9) puisse être installé sous la forme d'une unité préassemblée.

6. Ensemble de changement de vitesse selon l'une quelconque des revendications précédentes, dans lequel l'élément d'inclinaison (12) est un ressort de tension, un ressort de pression ou un ressort de rotation.

7. Ensemble de changement de vitesse selon l'une quelconque des revendications précédentes, dans lequel l'élément de verrouillage (13) est un verrou estampé.

8. Ensemble de changement de vitesse selon l'une quelconque des revendications précédentes, dans lequel l'au moins un ensemble de verrouillage inclut deux roues à rochet orientées à l'opposé (4, 5) et dans lequel l'ensemble de changement de vitesse comprend deux ensembles de verrouillage (8, 9), chacun attribué à une des roues à rochet (4, 5).

9. Ensemble de changement de vitesse selon la revendication 8, dans lequel l'ensemble de changement de vitesse est raccordé à une unité de commande pour commander l'actionnement des dispositifs de retenue activables électriquement (11), dans lequel l'unité de commande est configurée de sorte que les dispositifs de retenue activables électriquement (11) puissent être activés indépendamment l'un de l'autre.

10. Véhicule comprenant un ensemble de changement de vitesse selon l'une quelconque des revendications précédentes.
